# EUROPEAN PATENT APPLICATION

(11) **EP 4 756 702 A1**
(43) Date of publication of application: **10.06.2026**
(21) Application number: 25219144.0
(22) Date of filing: 27.11.2025
(51) Int. Cl.: G06Q 50/40, G06Q 10/08, B64D 9/00, G06Q 10/083

(54) **METHOD OF INCREASING THE EFFICIENCY OF A VEHICLE BY UTILIZING AVAILABLE SPACE IN A CARGO HOLD**

(30) Priority: 03.12.2024 US 202463727246 P; 13.08.2025 US 202519298705
(71) Applicant: The Boeing Company, Arlington, VA 22202 (US)
(72) Inventor: MORMAN, Brian James, ARLINGTON, 22202 (US); CALLAHAN, Kevin S., 22202, 22202 (US)
(74) Representative: Plasseraud IP

(57) **Abstract**

Methods and system of transporting cargo in a vehicle. A method includes after first cargo has been loaded into a cargo hold of a vehicle at a first location, determining available space within the cargo hold of the vehicle with the available space being unoccupied by the first cargo. After the vehicle leaves the first location, determining second cargo that is sized to fit in the available space. Loading the second cargo into the available space of the vehicle at a second location. The method also includes transporting the first cargo and the second cargo to a third location.

## Description

### RELATED APPLICATIONS

This application claims the benefit of U.S. Provisional Application No. 63/727,246, filed on December 3, 2024.

### TECHNOLOGICAL FIELD

The present disclosure relates generally to the field of transporting cargo and, more specifically, to utilizing available space within a cargo hold of a vehicle.

### BACKGROUND

Cargo is shipped using a variety of different vehicles including but not limited to trucks, ships, and aircraft. The vehicles include a cargo hold configured to contain the cargo during shipping. In some examples, the cargo hold includes exterior walls that extend around and contain the space. The exterior walls protect the cargo and prevent damage during shipping. In other examples, one or more sides of the cargo hold are open. The cargo can be shipped in a variety of configurations depending on the context. Cargo can be packaged in containers and stacked on pallets or within the interior space of shipping container. Some cargo is shipped separately without being packaged in a container, such as large industrial equipment that is not applicable for packaging in a container. The different cargo has different shapes and sizes.

An objective of a shipping entity in shipping cargo is a high efficiency. The efficiency is the amount of cargo that is loaded into the cargo hold relative to the size of the cargo hold. For example, a trailer that is 53 feet long, 8.5 feet wide, and 9 feet high has a cubic capacity of about 4800 cubic feet. Ideally, a shipping entity can load cargo that completely fills this space. When the space is filled, the shipping entity is more profitable than a vehicle with a lower efficiency. Further, an increase in efficiency can often be transferred to the customer resulting in a lower shipping rate.

However, often times a shipping entity is not able to fill the cargo hold resulting in a lower efficiency. In the example above, this occurs when the loaded cargo occupies less than the available 4800 cubic feet. In some examples, the shipping entity makes less profit as they are unable to charge for the entire available space. In some examples, the customer pays a higher overall rate as they are responsible for the entire cargo hold regardless of whether it is completely filled.

Systems and methods are needed to increase the amount of cargo that is loaded into a cargo hold and therefore increase the efficiency.

### SUMMARY

One aspect is directed to a method of transporting cargo in a vehicle as defined in the appended claims. The method comprises: after first cargo has been loaded into a cargo hold of a vehicle at a first location, determining available space within the cargo hold of the vehicle, the available space being unoccupied by the first cargo; after the vehicle leaves the first location, determining second cargo that is sized to fit in the available space; loading the second cargo into the available space of the vehicle at a second location; and transporting the first cargo and the second cargo to a third location.

In another aspect, the method further comprises determining the available space while the vehicle is in transit between the first location and the second location.

In another aspect, the method further comprises determining a volume of the available space in the cargo hold and determining that the second cargo is sized to fit into the volume prior to loading the second cargo into the cargo hold.

In another aspect, the method further comprises: communicating the available space to a plurality of potential entities; receiving a response from one of the potential entities; and loading the second cargo from the one potential entity into the vehicle.

In another aspect, the method further comprises loading the first cargo and the second cargo into the cargo hold of an aircraft.

In another aspect, the method further comprises determining contents of the second cargo prior to loading the second cargo into the available space of the vehicle.

In another aspect, the method further comprises: determining the available space at the vehicle; and communicating the available space from the vehicle to a remote monitoring node.

In another aspect, the method further comprises: capturing images of the first cargo and the cargo hold; and analyzing the images and determining the available space within the cargo hold.

In another aspect, the method further comprises determining the available space based on images of the cargo hold that are captured by cameras.

One aspect is directed to a method of transporting cargo in a vehicle not defined in the appended claims. The method comprises: determining available space in a cargo hold of a vehicle after first cargo has been loaded into the cargo hold at a first location; when a first request to transport second cargo from a second location has been previously received, accepting the first request and causing second cargo to be loaded onto the vehicle at a second location; when no first request has been received, receiving a second request to transport the second cargo that is received after determining the available space; accepting the second request to transport the second cargo; and causing the second cargo from the second request to be loaded onto the vehicle at the second location.

In another aspect, the method further comprises determining the available space after the vehicle leaves the first location.

In another aspect, the method further comprises determining the available space prior to the vehicle arriving at the second location.

In another aspect, the method further comprises determining the second cargo from the first request is sized to fit into the available space prior to accepting the first request.

In another aspect, the method further comprises determining the available space based on images of the cargo hold that are captured by cameras.

In another aspect, the method further comprises determining entities that have previously shipped cargo from the second location and transmitting offers to the entities indicating the available space in the vehicle.

One aspect is directed to a computing device as defined in the appended claims configured to increase an efficiency of a vehicle. The computing device comprises processing circuitry, communications circuitry, and memory circuitry that contains programming instructions that cause one or both of the processing circuitry and the communications circuitry to: determine available space in a cargo hold of a vehicle after first cargo has been loaded into the cargo hold; while the vehicle is transporting the first cargo, communicate to other entities that there is the available space within the cargo hold; in response to the communication, receive a request to transport second cargo in the vehicle; determine that the second cargo will fit into the available space; and accept the request to transport the second cargo while the vehicle is transporting the first cargo.

In another aspect, communications circuitry is configured to receive the available space in the cargo hold from the vehicle through a packet data network.

In another aspect, the processing circuitry is configured to determine the available space based on inputs from one or more sensors located in the vehicle.

In another aspect, the computing device is remote from the vehicle.

In another aspect, a control unit is positioned in the vehicle and configured to determine the available space in the cargo hold.

The features, functions and advantages that have been discussed is these examples can be achieved independently in various aspects or may be combined in yet other aspects, further details of which can be seen with reference to the description and the drawings.

### BRIEF DESCRIPTION OF THE DRAWINGS

Figure 1 is an isometric view of an example of vehicle.
Figure 2 is a section view cut along line II-II of Figure 1 illustrating an example of cargo hold positioned within an interior of the vehicle.
Figure 3 is an isometric view of an example of cargo that is positioned within a cargo hold of a vehicle.
Figure 4 is a schematic diagram of an example of control unit positioned in the vehicle and that receives signals from sensors that are positioned in the cargo hold.
Figure 5 is a schematic diagram of an example of control unit.
Figure 6 is a schematic diagram illustrating the transporting of cargo by a vehicle as the vehicle moves to different locations.
Figure 7 is a schematic diagram of an example of wireless communications network.
Figure 8 is a schematic diagram of an example of remote monitoring node.
Figure 9 is a flowchart diagram of an example of method of transporting cargo and increasing the efficiency of a vehicle.
Figure 10 is a flowchart diagram of an example of method of transporting cargo and increasing the efficiency of a vehicle.

### DETAILED DESCRIPTION

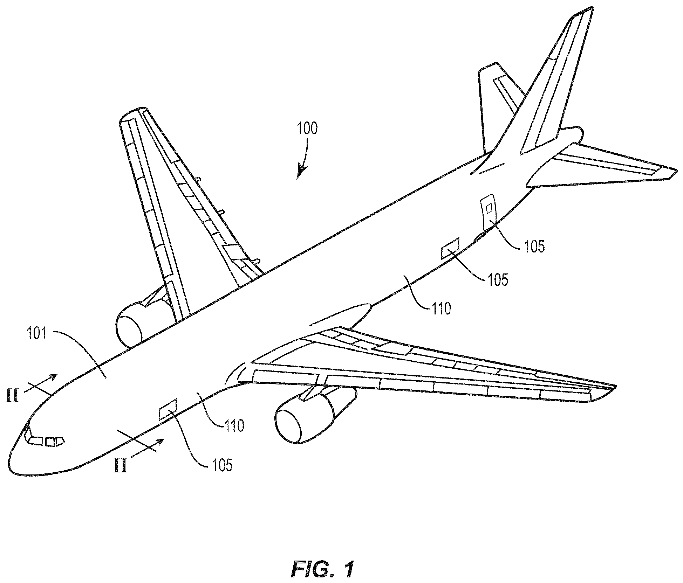

Figure 1 illustrates a vehicle 100 that is used to transport cargo. For purposes of explanation, this application uses an aircraft as an example of a vehicle 100. The monitoring system can also be used with other types of vehicles 100 including but not limited to ships, train cars, and freight trailers configured to be transported by trucks. In the example of Figure 1, the aircraft 100 includes a fuselage 101 configured to hold cargo. One or more doors 105 lead into a cargo hold 110 formed within the interior of the fuselage 101 and configured to hold the cargo during flight.

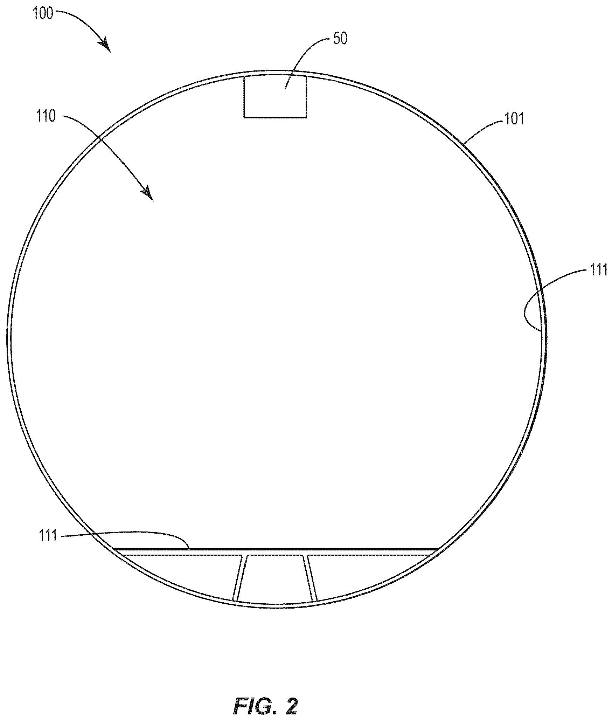

Figure 2 illustrates a sectional view of the fuselage 101 that includes the cargo hold 110. The cargo hold 110 is enclosed within the fuselage 101. The cargo hold 110 includes outer walls 111 that have one or more of a floor, ceiling, and side walls. The walls 111 can be formed by the interior of the walls of the fuselage 101 or can be separate components that are positioned within the interior of the fuselage 101. The cargo hold 110 can include various shapes and sizes to hold a wide variety of cargo. The cargo hold 110 can be divided into smaller sections as needed. In one example, the cargo hold 110 divided into two lateral sections including a starboard section and a port section. The sections can also be divided along the length of the vehicle 100.

The cargo hold 110 is configured to hold a variety of different configurations of cargo. One example includes a pallet on which individual packages are stacked. Netting, rope, wrap, etc. can extend around and maintain the packages on the container. Another example of cargo is a unit load device that includes a container that extends around and forms an enclosed interior space. Cargo can also include individual products, such as cars, machinery, etc. that are relatively large and shipped as a unit without a container. The cargo can have various shapes and sizes to fit within the doors 105 that lead into the cargo hold 110.

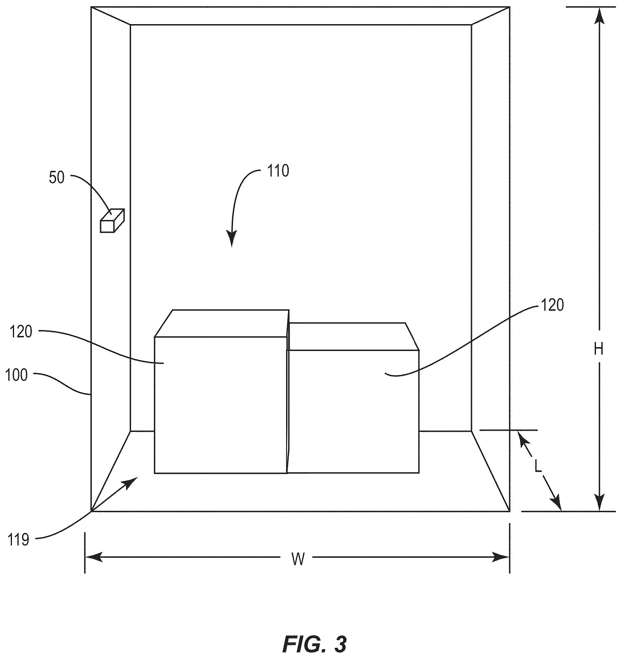

Figure 3 illustrates an example of cargo 120 positioned within a cargo hold 110 of a vehicle 100. In this example, the cargo 120 includes containers that extend around an interior space that hold the different items. The cargo 120 occupies a portion of the volume within the cargo hold 110 that extends along the width W, height H, and length L. In this example, the cargo 120 occupies a limited amount of the overall volume. The cargo hold 110 includes available space 119 that can be used to transport additional cargo 120.

One or more sensors 50 are positioned in the cargo hold 110 to determine the available space 119. The number, positioning, and type of sensors 50 can vary. Figure 2 includes an example with a single sensor 50 positioned in the cargo hold 110, with Figure 3 including an example with multiple sensors 50. In some examples, the sensors 50 include cameras that capture a visual image of the cargo 120. The sensors 50 can capture still images or video images of the cargo 120. The cameras are configured to capture two-dimensional and/or three-dimensional images. In some examples, multiple cameras are positioned to obtain dissimilar perspectives of the cargo 120. The different perspectives provide for capturing the different sides of the cargo 120 to provide for more accurate volume estimation and provide for redundant images in the event one or more of the cameras is non-operational or the view is blocked. In some examples, the cameras include a fixed field of view.

Cameras are one example of sensors 50 used to detect cargo 120. Other examples of sensors 50 that sense the cargo 120 and available space 119 include but are not limited to thermal imaging devices, ultrasonic sensors, radar, sonar, LiDAR, and 3D scanning. In some examples, different types of sensors are used in combination to determine the available space 119.

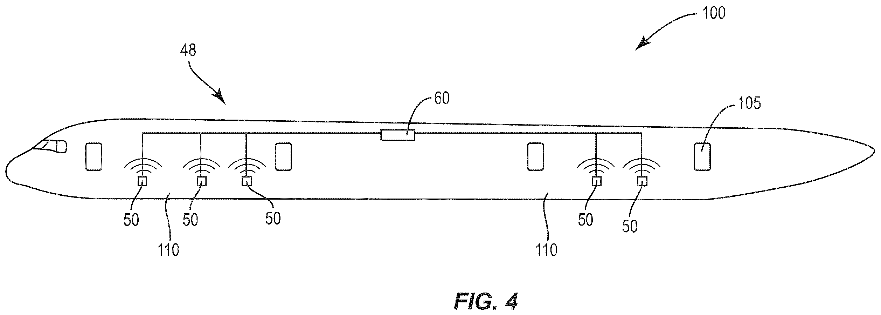

A control unit 60 receives the signals from the sensors 50 and determines the available space 119. The control unit 60 can communicate with the sensors 50 through wireless and/or wireless connections. Figure 4 includes an example in which the control unit 60 is positioned in the vehicle and communicates with multiple sensors 50 that are located in the cargo hold 110. In one example, the communications are through a local area network 48 that is part of the vehicle's communication system.

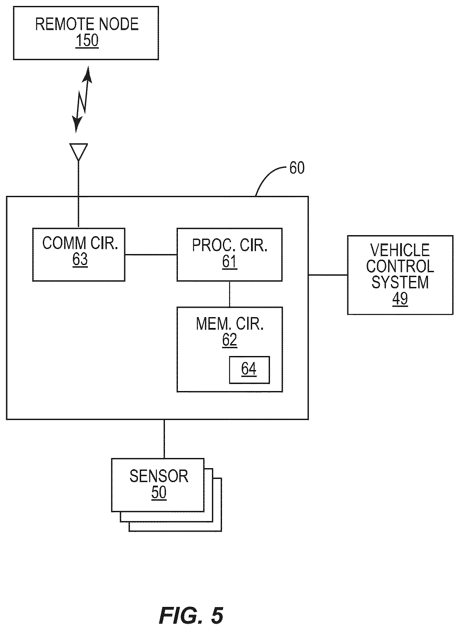

As illustrated in Figure 5, the control unit 60 includes processing circuitry 61 and memory circuitry 62. The processing circuitry 61 controls the operation of determining the efficiency of the cargo hold 110 in the cargo hold 110 according to program instructions 64 stored in the memory circuitry 62. The processing circuitry 61 can include one or more circuits, microcontrollers, microprocessors, hardware, or a combination thereof. Memory circuitry 62 includes a non-transitory computer readable storage medium storing program instructions 64, such as a computer program product, that configures the processing circuitry 61 to implement one or more of the techniques discussed herein. Memory circuitry 62 can include various memory devices such as, for example, read-only memory, and flash memory. Memory circuitry 62 can be a separate component or can be incorporated with the processing circuitry 61. Alternatively, the processing circuitry 61 can omit the memory circuitry 62, e.g., according to at least some embodiments in which the processing circuitry 61 is dedicated and non-programmable.

The control unit 60 includes communications circuitry 63 that provides for communication functionality with the sensors 50. The communications circuitry 63 can provide for one-way communications from the sensors 50 or two-way communications that are both to and from the sensors 50. The communication circuitry 63 can also provide for communications with a remote monitoring node 150 that monitors the status of the cargo. The control unit 60 also communicates with other systems on the vehicle 100, such as a vehicle control system 49 that controls the operation of one or more larger functions of the vehicle 100. In one example in which the vehicle 100 is an aircraft, the vehicle control system 49 is a flight control system that controls the operations of the aircraft during flight.

The control unit 60 determines the amount of cargo 120 in the cargo hold 110/available space 119 after the cargo 120 is loaded. In some examples, this occurs when a door to the cargo hold 110 is closed indicating that loading is complete. In other examples, this occurs after the vehicle 100 begins to move. In some examples, a control unit 60 receives a signal indicating that loading is complete, such as an input directly from an operator (e.g., pilot, driver, captain), or a signal from the vehicle control system 49 indicating movement of the vehicle 100.

The control unit 60 is configured to detect the location of the available space 119 within the cargo hold 110 and/or to detect the dimensions of the available space 119. In some examples, this analysis utilizes semantic segmentation that uses the images and classifies the cargo 120 and/or space within the cargo hold 110 relative to other areas in the images. The process analyzes pixels within the images to detect relative sizes. Based on the pixels, an overall size and dimensions of the cargo 120 and/or available space 119 is determined. In other examples, the sizing is determined by use of a contour mapping algorithm that uses the image scale of the cameras. The scale is determined based on the known field of view of the camera that captures an image. In one example, the image for scaling is captured at a point in the field of view of the camera having a known reference. For example, a point where each number of pixels equates to a known length of the cargo 120 (e.g., x pixels in the image = x feet of the cargo; 477 pixels = 10 ft.; 1023 pixels = 12 ft.). In some examples, multiple cameras are used to capture images and scaling is done for each of the different cameras. For example, a first camera captures a side view of the cargo 120 at a location having a first scale. A second camera captures a rear view of the cargo 120 at a point having a second scale. The scaling from the two separate cameras are used to determine two dimensions of the cargo 120. In some examples, the control unit 60 receives the images from the cameras and uses one or more of machine learned perception and photogrammetry to determine the size of the cargo 120 and/or dimensions of the available space 119.

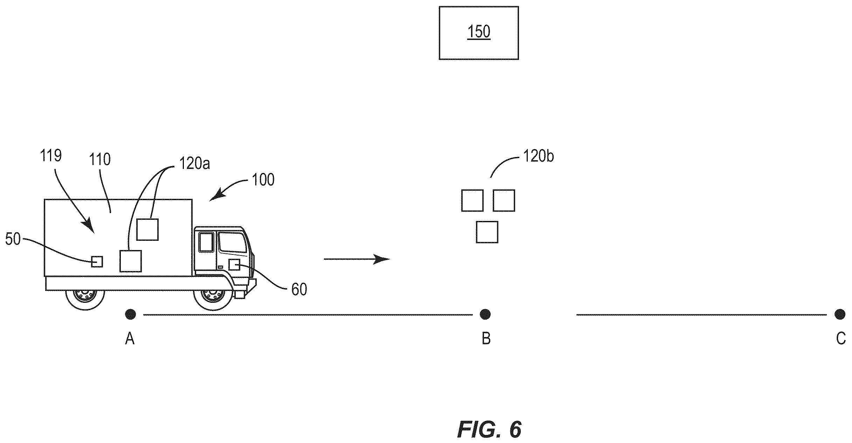

The remote monitoring node 150 monitors the status of the vehicle 100 and the available space 119. The remote monitoring node 150 further functions to fill the available space 119 with additional cargo 120. The additional cargo 120 is from one or more other parties and is added to the cargo hold 110 at a subsequent location. Figure 6 schematically illustrates an example of the process. The vehicle 100 is loaded with cargo 120a at location A. After the loading is complete, one or more sensors 50 sense the cargo hold 110. A control unit 60 at the vehicle 100 determines the amount of available space 119 based on the signals from the sensors 50. The available space 119 can include one or more of the total volume and dimensions of space. The control unit 60 communicates the available space 119 to the remote monitoring node 150. The remote monitoring node 150 locates additional cargo 120b that can be added to the cargo hold 110. At a location downstream from location A, the additional cargo 120b is added to the cargo hold 110. In the specific example of Figure 6, the additional cargo 120b is added at location B. The vehicle 100 with the original cargo 120a and the newly-loaded additional cargo 120b proceeds to one or more additional destinations where the cargo 120 is unloaded from the vehicle 100. In the example of Figure 6, the cargo 120 is unloaded at location C.

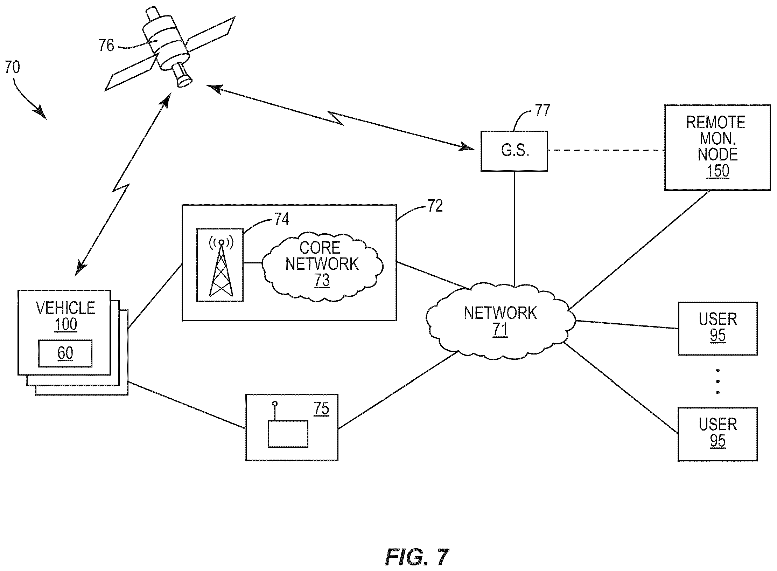

The remote monitoring node 150 communicates with one of more vehicles 100 and coordinates the loading and transport of cargo 120. The remote monitoring node 150 also communicates with entities that have cargo 120 that can be loaded into the available space 119 on the vehicles 100. Figure 7 illustrates an example of a remote monitoring node 150 that is a server that monitors one or more vehicles 100. The monitoring can occur while the vehicles 100 are stopped and being loaded/unloaded, as well as when vehicles 100 are moving. The remote monitoring node 150 monitors and communicates with the vehicles 100 through a wireless communications network 70. The communications circuitry 63 of the control units 60 respectively enable communication with the remote monitoring node 150 through the wireless communications network 70.

The wireless communication network 70 can includes s packet data network (PDN) 71. The PDN 71 can include a public network such as the Internet, or a private network. The wireless communications network 70 can include a mobile communication network 72 (e.g., a WCDMA, LTE, or WiMAX network). The mobile communication network (MCN) 72 includes a core network 73 and a radio access network (RAN) 74 including one or more base stations. The MCN 72 can be a conventional cellular network operating according to any communication standards now known or later developed. For example, the MCN 72 can comprise a Wideband Code Division Multiple Access (WCDMA) network, a Long Term Evolution (LTE) network, or WiMAX network. The MCN 72 is further configured to access the packet data network (PDN) 71. Communication can also occur through a Wireless Local Area Network (WLAN) 75 that operates according to the 802.11 family of standards, which is commonly known as a WiFi interface.

Communications can also be available through one or more satellites 76. The satellites 76 can communicate to the remote monitoring remote monitoring node 150 through one or more ground stations 77. The ground stations 77 can communicate to the remote monitoring node 150 through the PDN 71, or without use of the PDN 71.

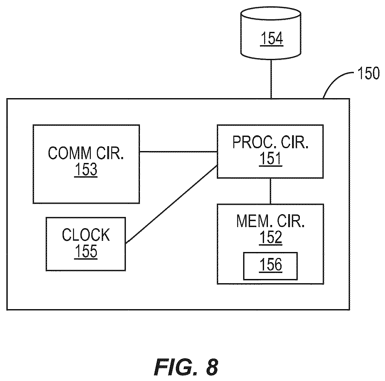

As illustrated in Figure 8, the remote monitoring node 150 includes one or more processing circuits (illustrated as processing circuitry 151) that may include one or more microprocessors, microcontrollers, Application Specific Integrated Circuits (ASICs), or the like, configured with appropriate software and/or firmware. A computer readable storage medium (shown as memory circuitry 152) stores data and computer readable program code that configures the processing circuitry 151 to implement the techniques described above. The processing circuitry 151 controls the operation of remote monitoring node 150 according to program instructions 156 stored in the memory circuitry 152.

Memory circuitry 152 is a non-transitory computer readable medium and may include various memory devices such as random-access memory, read-only memory, and flash memory. Communications circuitry 153 connects the remote monitoring node 150 to the PDN 71 and can be configured to communicate with the PDN 71 according to one or more 802.11 standards. The communications circuitry 153 can support a wired connection (e.g., Ethernet), a wireless connection, or both. A database 154 stores information about one or more of the available space 119, cargo hold 110, cargo 120, and vehicles 100. The database 154 is stored in a non-transitory computer readable storage medium (e.g., an electronic, magnetic, optical, electromagnetic, or semiconductor system-based storage device). The database 154 can be local or remote relative to the remote monitoring node 150. A clock 155 can measure various timing requirements regarding the movement of the vehicles 100. The clock 155 can be incorporated with the processing circuitry 151 or can be a separate component independent from the processing circuitry 151.

In some examples, the remote monitoring node 150 is configured to provide a web interface for access by one or more entities. The remote monitoring node 150 is configured for accessing information about the available space 119 using a browser-based interface or an applications program interface (API). The browser-based interface can include a website through which the contents of the database 154 can be accessible. Although the website can be hosted by the remote monitoring node 150, it can also be hosted at another location accessible through the PDN 71.

Entities can access the information at the remote monitoring node 150 through a variety of devices 95. The devices 95 can include laptop computers, personal computers, personal digital assistants, mobile computing/communication, tablet devices, and various other-like computing devices. Each of the entities uses a respective device 95 and accesses the remote monitoring node 150 through the PDN 71, or alternatively some other network. In one embodiment, one or more of the entities can use his or her respective device 95 to access the remote monitoring node 150 through a separate portal. Each entity's portal can include a secure interface through which the entity can access the information that is assigned to them. In some examples, the remote monitoring node 150 is configured for browser-based accessibility. The browser-based interface can support well-known browsers such as Internet Explorer and Mozilla Firefox, Safari, Chrome. Alternatively, or in conjunction the entities can obtain the information using one or more APIs through their device 95.

An entity that is in need of transporting their cargo can have access to the remote monitoring node 150 through their devices 95. The entity is able to access the remote monitoring node 150 and determine the available space 119 that they can use to transport the cargo 120. After their cargo 120 is loaded onto one or more vehicles 100, the entity is able to access the remote monitoring node 150 to monitor the status of the cargo 120.

In some examples, an entity initially establishes an account. The account can include information about the entity such as but not limited to name, address, and contact information. The account can also include information regarding payment. After the account is created, the entity accesses the system and enters the relevant information about the cargo 120 that is to be shipped. Information can include but is not limited to: the amount of cargo including the size; weight; current location; final destination; and delivery deadlines. In some examples, the 3 of the cargo 120 is also included in the request. The contents can include whether the cargo has a fire classification (e.g., flammable, combustible) and/or hazardous material classification.

The remote monitoring node 150 receives the requests and searches the records to determine possible options that can meet the requirements of the request. The remote monitoring node 150 presents the one or more options that meet the requirements. The entity is then able to select one of the options.

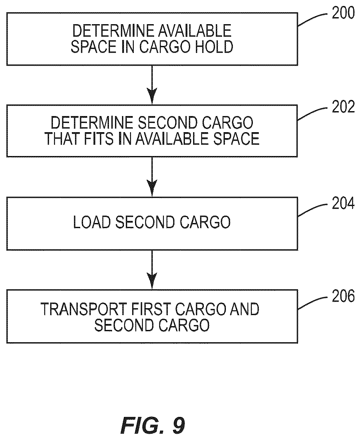

Figure 9 illustrates a method performed by the remote monitoring node 150 to increase the efficiency of a vehicle 100 when transporting cargo 120. Initially, first cargo 120a is loaded into the cargo hold 110 of the vehicle 100 at a first location. The first cargo 120a is sized to fill a limited portion of the cargo hold 110. After the loading is complete, the control unit 60 at the vehicle 100 determines the available space 119 in the cargo hold 110 and transmits the information to the remote monitoring node 150 (block 200). The determination of the available space 119 is performed at some point after the first cargo loading is complete. Examples include when the cargo hold 110 is closed, when the vehicle 100 starts moving after loading, and when signaled by an operator at the vehicle 100.

The remote monitoring node 202 determines cargo from another entity that fits in the available space 119 (block 202). The remote monitoring node 202 makes the determination after the vehicle 100 has left the first location where the first cargo 120a was loaded. In some examples, the determination occurs while the vehicle 100 is in transit moving towards a second downstream location. In another example, the determination is made while the vehicle 100 is at the second location. In some examples, the determination of additional cargo is made during a time that does not delay the transport of the first cargo and the vehicle 100 from the first location to the second location.

When the vehicle 100 is at the second location, the additional second cargo 120b is loaded into the available space 119 (block 204). The vehicle 100 then transports both the first cargo 120a and the second cargo 120b that are both located in the cargo hold 110 (block 206).

In some examples, the issue of whether the second cargo 120b fits into the available space 119 is based on the physical sizes. Additionally or alternatively, the issue is based on the contents of the first cargo 120a and the second cargo 120b. Some cargo 120 should not be shipped together such as but not limited to because of fire classifications or hazardous material classification. The remote monitoring node 150 analyzes the contents of the different cargo 120. The remote monitoring node 150 ensures that the different cargo 120 is compatible prior to allow loading of the subsequent cargo 120 into the available space 119.

In some examples, the second cargo 120b fills the available space 119. No additional cargo 120 is able to fit into the cargo hold 110. In other examples, the second cargo 120b does not fill the available space 119. Additional cargo 120 can be loaded into the vehicle 100 either at the second location or another downstream location.

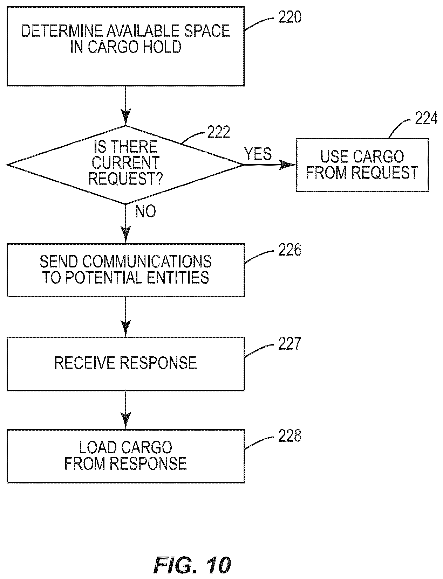

The remote monitoring node 150 functions to increase the efficiency of the vehicle 100 by finding the additional cargo 120 to load at downstream locations. Figure 10 illustrates one example of this functioning. The remote monitoring node 150 determines that there is available space 119 in the cargo hold 110 of a vehicle 100 (block 220). The remote monitoring node 150 determines if there is a current request from an entity to ship cargo that would conform to the available space (block 222). For example, a entity that commonly uses these services can have a continuous request for shipping between various locations. If there is a conforming request, the remote monitoring node 150 confirms the shipping with the entity and enables the second cargo 120b to be loaded when the vehicle 100 is at the second location (block 224).

If there is no request, the remote monitoring node 150 solicits entities that could be in need of transportation (block 226). In some examples, this includes entities that have an account and/or have previously shipped cargo from the second location. In some examples, this also includes sending out communications to other entities that do not have an account and/or who have not previously used the transportation system.

The remote monitoring node 150 receives a response indicating that an entity has cargo 120b that is in need of shipping to a downstream location (block 227). The remote monitoring node 150 confirms the shipping and enables their cargo 120b to be loaded onto the vehicle at the second location (block 228).

The systems and methods of the transportation system can have different configurations. In the examples disclosed above, the control unit 60 of the vehicle 100 determines the available space 119 in the cargo hold 110. In other examples, the remote monitoring node 150 determines the available space 119 based on signals from the one or more sensors 50. In some examples, both the control unit 60 and the remote monitoring node 150 determine the available space 119.

The systems and method can be used on a variety of vehicles 100. Vehicles 100 include but are not limited to aircraft, watercraft, and freight trailers for trains and trucks. In one example, the vehicle 100 is used in a passenger aircraft that includes a cabin area for transporting passengers and a separate cargo hold 110.

Further, the disclosure includes examples according to the following clauses:
Clause 1. A method of transporting cargo in a vehicle, the method comprising:
   after first cargo has been loaded into a cargo hold of a vehicle at a first location, determining available space within the cargo hold of the vehicle, the available space being unoccupied by the first cargo;
   after the vehicle leaves the first location, determining second cargo that is sized to fit in the available space;
   loading the second cargo into the available space of the vehicle at a second location; and
   transporting the first cargo and the second cargo to a third location.
Clause 2. The method of clause 1, further comprising determining the available space while the vehicle is in transit between the first location and the second location.
Clause 3. The method of clause 1, further comprising:
   determining a volume of the available space in the cargo hold; and
   determining that the second cargo is sized to fit into the volume prior to loading the second cargo into the cargo hold.
Clause 4. The method of clause 1, further comprising:
   communicating the available space to a plurality of potential entities;
   receiving a response from one of the potential entities; and
   loading the second cargo from the one potential entity into the vehicle.
Clause 5. The method of clause 1, further comprising loading the first cargo and the second cargo into the cargo hold of an aircraft.
Clause 6. The method of clause 1, further comprising determining contents of the second cargo prior to loading the second cargo into the available space of the vehicle.
Clause 7. The method of clause 1, further comprising:
   determining the available space at the vehicle; and
   communicating the available space from the vehicle to a remote monitoring node.
Clause 8. The method of clause 1, further comprising:
   capturing images of the first cargo and the cargo hold; and
   analyzing the images and determining the available space within the cargo hold.
Clause 9. The method of clause 1, further comprising determining the available space based on images of the cargo hold that are captured by cameras.
Clause 10. A method of transporting cargo in a vehicle, the method comprising:
   determining available space in a cargo hold of a vehicle after first cargo has been loaded into the cargo hold at a first location;
   when a first request to transport second cargo from a second location has been previously received, accepting the first request and causing second cargo to be loaded onto the vehicle at a second location;
   when no first request has been received, receiving a second request to transport the second cargo that is received after determining the available space;

   accepting the second request to transport the second cargo; and
   causing the second cargo from the second request to be loaded onto the vehicle at the second location.
Clause 11. The method of clause 10, further comprising determining the available space after the vehicle leaves the first location.
Clause 12. The method of clause 11, further comprising determining the available space prior to the vehicle arriving at the second location.
Clause 13. The method of clause 10, further comprising determining the second cargo from the first request is sized to fit into the available space prior to accepting the first request.
Clause 14. The method of clause 10, further comprising determining the available space based on images of the cargo hold that are captured by cameras.
Clause 15. The method of clause 10, further comprising determining entities that have previously shipped cargo from the second location and transmitting offers to the entities indicating the available space in the vehicle.
Clause 16. A computing device configured to increase an efficiency of a vehicle, the computing device comprising:
   processing circuitry;
   communications circuitry; and
   memory circuitry that contains programming instructions that cause one or both of the processing circuitry and the communications circuitry to:
      determine available space in a cargo hold of a vehicle after first cargo has been loaded into the cargo hold;
      while the vehicle is transporting the first cargo, communicate to other entities that there is the available space within the cargo hold;
      in response to the communication, receive a request to transport second cargo in the vehicle;
      determine that the second cargo will fit into the available space; and
      accept the request to transport the second cargo while the vehicle is transporting the first cargo.
Clause 17. The computing device of clause 16, further comprising the communications circuitry configured to receive the available space in the cargo hold from the vehicle through a packet data network.
Clause 18. The computing device of clause 16, further comprising the processing circuitry configured to determine the available space based on inputs from one or more sensors located in the vehicle.
Clause 19. The computing device of clause 16, wherein the computing device is remote from the vehicle.
Clause 20. The computing device of clause 16, further comprising a control unit positioned in the vehicle and configured to determine the available space in the cargo hold.

The present systems and methods may, of course, be carried out in other ways than those specifically set forth herein. The present examples are to be considered in all respects as illustrative and not restrictive, and all changes coming within the meaning and equivalency range of the various elements are intended to be embraced therein.

## Claims

1. A method of transporting cargo (120) in a vehicle (100), the method comprising:
after first cargo (120a) has been loaded into a cargo hold (110) of a vehicle (100) at a first location, determining available space (119) within the cargo hold (110) of the vehicle (100), the available space (119) being unoccupied by the first cargo (120a);
after the vehicle (100) leaves the first location, determining second cargo (120b) that is sized to fit in the available space (119);
loading the second cargo (120b) into the available space (119) of the vehicle (100) at a second location; and
transporting the first cargo (120a) and the second cargo (120b) to a third location.

2. The method of claim 1, further comprising determining the available space (119) while the vehicle (100) is in transit between the first location and the second location.

3. The method of claims 1 or 2, further comprising:
determining a volume of the available space (119) in the cargo hold (110); and
determining that the second cargo (120b) is sized to fit into the volume prior to loading the second cargo (120b) into the cargo hold (110).

4. The method of any one of claims 1 to 3, further comprising determining entities that have previously shipped cargo (120) from the second location and transmitting offers to the entities indicating the available space (119) in the vehicle (100).

5. The method of ant one of claims 1 to 4, further comprising:
communicating the available space (119) to a plurality of potential entities;
receiving a response from one of the potential entities; and
loading the second cargo (120b) from the one potential entity into the vehicle (100).

6. The method of any one of claims 1 to 5, further comprising loading the first cargo (120a) and the second cargo (120b) into the cargo hold (110) of an aircraft.

7. The method of any one of claims 1 to 6, further comprising determining contents of the second cargo (120b) prior to loading the second cargo (120b) into the available space (119) of the vehicle (100).

8. The method of any one of claims 1 to 7, further comprising:
determining the available space (119) at the vehicle (100); and
communicating the available space (119) from the vehicle (100) to a remote monitoring node (150).

9. The method of any one of claims 1 to 8, further comprising:
capturing images of the first cargo (120a) and the cargo hold (110); and
analyzing the images and determining the available space (119) within the cargo hold (110).

10. The method of any one of claims 1 to 9, further comprising determining the available space (119) based on images of the cargo hold (110) that are captured by cameras.

11. A computing device configured to increase an efficiency of a vehicle (100), the computing device comprising:
processing circuitry (151);
communications circuitry (153); and
memory circuitry (152) that contains programming instructions (156) that cause one or both of the processing circuitry (151) and the communications circuitry 153 to perform the method according to any one of claims 1 to 10.

12. The computing device of claim 11, further comprising the communications circuitry (153) configured to receive the available space (119) in the cargo hold (110) from the vehicle (100) through a packet data network (71).

13. The computing device of claim 11 or 12, further comprising the processing circuitry (151) configured to determine the available space (119) based on inputs from one or more sensors (50) located in the vehicle (100).

14. The computing device of any one of claims 11 to 13, wherein the computing device is remote from the vehicle (100).

15. The computing device of any one of claims 11 to 14, further comprising a control unit (60) positioned in the vehicle (100) and configured to determine the available space (119) in the cargo hold (110).
